# EUROPEAN PATENT APPLICATION

(11) **EP 0 702 901 A2**
(43) Date of publication of application: **27.03.1996**
(21) Application number: 95305755.1
(22) Date of filing: 17.08.1995
(51) Int. Cl.: A23J 3/14, A23L 1/314, A23J 3/16

(54) **Granular proteinaceous material, process for producing it, and processed minced meat analogue food comprising it**

(30) Priority: 26.08.1994 JP 201819/94
(71) Applicant: FUJI OIL COMPANY, LIMITED, Osaka-shi, Osaka-fu 542 (JP)
(72) Inventor: Nakatani, Shin, Yao-shi, Osaka-fu (JP); Asakura, Norie, Osaka-shi, Osaka-fu (JP)
(74) Representative: Baverstock, Michael George Douglas

(57) **Abstract**

A granular proteinaceous food material comprises a heat coagulable vegetable protein the surface of which is coated with an oil. The granular proteinaceous food material is useful for the production of a processed minced meat food analogue. The granular proteinaceous material is prepared by forming a hydrate of a heat coagulable vegetable protein and water into granular form in contact with an oil.

## Description

The present invention relates to a granular protein-aceous food material the surface of which is coated with an oil and a processed minced meat food analogue such as a meatball analogue and a hamburger analogue in which the granular proteinaceous food material is used in place of minced meat.

Granular proteinaceous materials having meat analogous texture have been produced by various methods. Examples thereof include a textured vegetable protein (TVP). Its production process includes such a step that a vegetable proteinaceous raw material is extruded at a high temperature under high pressure with an extruder to give texture to the material. Then, this process requires a specific apparatus such as an extruder. In addition, the resultant textured vegetable protein forms a rigid texture due to heat denaturation and therefore there is a problem that the resultant product has a strong smell of the vegetable proteinaceous raw material due to heating in addition to remaining in the mouth after mastication.

A structured vegetable protein is also known. This protein is obtained by injecting a proteinaceous raw material slurry through a heat exchanger under high pressure (back pressure) at a high temperature as disclosed in, for example, U.S. Patent 3,821,453 and has an excellent fibrous structure. However, the structure of such protein is clearly distinguished from a granular protein and there is still a problem of a smell of proteinaceous raw material due to heating.

As another process for producing meat proteinaceous food analogue without using an extruder, there is known a process wherein a hydrated material of isolated soybean protein is gelled by allowing the material to stand at a low temperature (so called "suwari") or by heating and the gelled material is cut to produced a minced meat analogue.

Specifically, U.S. Patent 2,802,737 discloses a gel precursor prepared by mixing soybean proteins with water or the like. According to the disclosure, layers of the gel precursor and a dough (prepared by adding water or the like to wheat flour and kneading the resultant mixture) are piled up alternately and the pile is pressed, cut with a silent food cutter, molded into a mold and heated to obtain a luncheon meat analogue. Although the above-described U.S. Patent 2,802,737 discloses that the pressed pile of layers of the gel precursor and wheat dough is cut, there is no disclosure of cutting a pile of only the gel precursor layers. In fact, since the gel precursor layers adhere to each other, if such a pile is cut, it is very difficult to separate each layer so as to form granules.

JP-B 59-4979 discloses a process for preparing a raw material for food as soybean protein gel applicable to processed animal and fish meat food products. In the process, an aqueous mixture of vegetable proteins containing 10 to 35% by weight of soybean proteins is thoroughly kneaded and allowed to stand at 0 to 60°C for more than 20 minutes to cause gelling ("suwari") to obtain a low-temperature gelled material. In addition, this publication discloses treatment of the low-temperature gelled material by pulverizing, cutting and the like and the use thereof in hamburger production.

However, this process requires a relatively long period of time for gelling. In fact, the kneaded mixture cannot be cut before gelling because of its very sticky properties.

JP-A 2-109942 discloses a soybean protein gel which provides excellent crispness, ease of swallowing and flexibility to processed meat foods and the like. In addition, this publication discloses a process for preparing a soybean protein gel by heating a kneaded mixture composed of soybean proteins, an emulsifier having HLB of 1 to 7 and water and cooling this mixture. Furthermore, processed animal meat food products containing this soybean protein gel are also disclosed. This heating treatment includes gelling by allowing to stand at a low temperature (so-called "suwari") and there is disclosed standing at 0 to 30°C for about 2 to 24 hours.

JP-A 5-260900 (corresponding to U.S. Patent 5,160,758) entitled "Process for Preparing Proteinaceous Granules for Use as Meat Extender" proposes to provide a hydrated proteinaceous material which can be readily mixed with chopped meat to give a mixture comparable with natural meat and discloses the production of hydrated proteinaceous granules by kneading one part by weight of an isolated vegetable protein and 2 to 3.5 parts by weight of water at a temperature higher than 50°C under shearing conditions.

In this method, warm water is directly used in a gel formation step by heating a hydrated protein and therefore this method requires preparation of warm water.

As described hereinabove, conventional substitutes for minced meat are prepared by cutting heated proteinaceous gels or low temperature gelled ("suwari") proteinaceous materials. If the cutting is attempted before gelling to form minced meat analogues, they adhere to each other to form a mass.

The main object of the present invention is to provide a granular proteinaceous food material which can be used in place of or together with minced meat and, upon heating, which can provide a product having granular meat type appearance and mouth feel and good affinity with minced meat (no incongruity). The present invention also provides processed minced meat food analogues such as a meatball analogue and a hamburger analogue in which the granular proteinaceous food material is used in place of minced meat.

These objects as well as other objects and advantages of the present invention will become apparent to those skilled in the art from the following description with reference to the accompanying drawings.

In the drawings:

Fig. 1 is a schematic cross section of a granule of the granular proteinaceous food material of the present invention.

Fig. 2 is a schematic cross sections illustrating the permeation of the water soluble pigment, "Oily Sunbeat", into the granule of proteinaceous material coated with a 1% dispersion of the pigment in oil as described in Experiment 2 hereinafter.

Fig. 3 is a schematic cross section illustrating the permeation of the oil soluble pigment, "Sudan III", into the granule of proteinaceous material coated with a 1% dispersion of the pigment in oil as described in Experiment 1 hereinafter. The oil soluble pigment is hardly permeated into the granule.

The inventors of the present application have studied intensively so as to attain the above objects of the present invention. In a course of the study, the inventors have found that a hydrate composed of soybean proteins and water (not warm water) adheres together during cutting to form a mass and fails to maintain a discontinuous granular form. However it has been found that a granular form can be readily maintained, when it is cut with addition of an oil. That is, it has been found that a granular proteinaceous material can be obtained using only water, not warm water and without preparation of a low-temperature gel by standing at a low temperature for a certain time ("suwari") or preparation of a heat gel by heating a conventional preparation of a heated gel as is done in a conventional technique. It has also been found that processed minced meat food analogues such as hamburger analogues and meatball analogues produced by using such granular proteinaceous material have the excellent granular texture of meat.

Specifically, according to the present invention, there is provided a granular proteinaceous material comprising a hydrate of a heat coagulable vegetable protein and water, the surface of which is coated with an oil. Suitably, the ratio of the oil covering the surface is 1 to 30 parts by weight per 100 parts by weight of the entire granular proteinaceous material. The present invention also provides a process for preparing the granular proteinaceous material which comprises molding a hydrate of a heat-coagulating vegetable protein and water into granular form, while contacting the hydrate with an oil. In the process of the present invention, the preparation of the hydrate and the molding of granules can be suitably carried out by using a single cutting apparatus, setting the rotation rate of the cutter blades in the molding step of granules to a rate lower than that in the preparation of the hydrate. In addition, the present invention provides a processed minced meat food analogue produced by kneading the above granular proteinaceous material and a binder, molding and cooking. The processed minced meat food analogue can further contain one or more granular materials selected from textured vegetable proteins, structured vegetable proteins and minced meat.

The granular proteinaceous material of the present invention has not any smell of raw proteinaceous material due to heating because it is different from conventional textured protein resulting from heat denaturation or a fibrous structured protein as described in the above U.S. Patent 3,821,453. Further, contrary to the above U.S. Patent 2,802,737, in the present invention, the hydrate of soybean proteins which corresponds to the gel precursor of that U.S. Patent can be cut into granules without formation of a sticky mass due to using an oil. Furthermore, in the present invention, formation of a low temperature gel as in JP-B 59-4979 and JP-A 2-109942 which requires standing for more than 20 minutes can be avoided an emulsifier as disclosed in JP-A 2-109942 is not required. In addition, warm water as in JP-B 5-260900 is not required.

One aspect of the present invention is to provide a granular proteinaceous material.

The granular proteinaceous material of the present invention comprises a hydrate mainly composed of a heat coagulable protein and water and is characterized in that the surface thereof is coated with a thin layer of an oil.

As the heat coagulable protein, vegetable proteins, for example, those derived from oil seeds such as soybean proteins, peanut proteins and the like are suitable because they can be constantly available on an industrial scale. In particular, soybean proteins are advantageous because they are constantly and readily available in large amount on an industrial scale. A suitable ratio of the heat coagulable protein to water is 1 to 6 parts by weight, preferably 2 to 4 parts by weight, more preferably 2 to 3 parts by weight of water per one part by weight of the heat coagulable protein.

As the ratio of water becomes smaller, the granular proteinaceous material tends to be elastic. On the other hand, as the ratio of water becomes larger, the material tends to be soft and less elastic. The hydrate keeps its shape when the heat coagulable protein is sufficiently hydrated with water. Therefore, as the amount of water is reduced, the hydrate becomes more elastic and flexible.

Animal proteins such as egg white and the like can be used as the heat coagulable protein together with vegetable proteins such as those from oil seeds in the granular proteinaceous material of the present invention.

As described above, the surface of the granular proteinaceous material is coated with a thin layer of an oil. The coating is not uniformly dispersed into the inside of the granular proteinaceous material and is distributed and concentrated on the surface. This state can be observed visually using an oil soluble pigment as described in Experiment 1 hereinafter.

The average diameter of the granular proteinaceous material is 2 to 7 mm, preferably 3 to 5 mm. Preferably, 1 to 30 parts by weight, preferably 5 to 20 parts by weight, more preferably 5 to 10 parts by weight of an oil per 100 parts by weight of the granular proteinaceous material is coated at the surface thereof. This surface coating of the oil is desired because it prevents adhesion between the particles after production, which facilitates handling of the particles.

Another aspect of the present invention is to provide a process for preparing the granular proteinaceous material. The process of the present invention is characterized in that the granular proteinaceous material can be produced continuously. That is, the process of the present invention is characterized in that:
(a) warm water used in a conventional technique is not required for preparing the granular proteinaceous material and the granular proteinaceous material can be continuously prepared using water;
(b) when water is used, according to a conventional technique, the material cannot be cut into granules due to adhesion unless a low temperature gel is formed by standing a hydrate for a certain period of time at low temperature, although such standing is not required in the present invention; or
(c) according to a conventional technique, the separation into granules is carried out after formation of a heated gel by using warm water or heating, although such formation of heated gel is not required in the present invention;
(d) in other words, the process of the present invention is characterized in that an oil is added prior to or during cutting; and,
(e) as another advantage of the process of the present invention, the same apparatus can be used both for preparing the hydrate and cutting the hydrate, which makes the production steps simple and makes continuous batch wise production possible.

As described above, the heat coagulable vegetable proteins to be used in the present invention are suitably proteins from oil seeds. Examples of oil seed proteins include soybean proteins, rapeseed proteins, peanut proteins, corn proteins and the like. In addition, rice proteins and wheat proteins can also be used. If necessary, animal proteins such as casein, egg white and the like can be used together with the vegetable proteins.

Any heat coagulable vegetable protein can be used in so far as it has shape retention, when a hydrate is formed. If a protein does not have shape retention, granules cannot be formed by cutting and, in addition, it is broken at a mixing stage with a binder in the production process of processed minced meat food analogues. Especially, when isolated soybean protein is used, its hydrate has excellent shape retention. Then, the resultant proteinaceous material has excellent meat granule appearance and texture and can give processed minced meat food analogues having excellent meat granule appearance and texture such as meatball and hamburger.

One to 6 parts by weight, preferably 2 to 4 parts by weight, more preferably 2 to 3 parts by weight of water can be added per 1 part by weight of the heat coagulable vegetable protein. When the amount of water content is too small, sufficient hydration of the heat coagulable vegetable protein and water cannot be obtained which results in a fragile material having poor shape retention. On the other hand, if the amount of water is too large, the hydrate has fluidity and shape retention is lost.

The process of the present invention is convenient because it is not necessary to heat water nor to adjust to a constant temperature. Normally, water at room temperature can be used. The water temperature is 5 to 25°C in many cases; however the temperature is changed according to season or operation conditions, for example, about 0°C or higher in winter, and about 30 to 40°C in summer.

Mouth feel of the granular proteinaceous material of the present invention is milder than that of the heat-denatured gel prepared by using warm water.

The ratio of water to the heat coagulable protein can be higher with increase in the protein content or NSI (nitrogen soluble index: the ratio of water soluble nitrogen) and can be lower with decrease in the protein content or NSI. Therefore, for example, in the case of soybean protein, the ratio of water to be added can be lower when soybean milk powder or a concentrated soybean protein having a low crude protein content is used. On the other hand, the ratio of water to be added can be higher when isolated soybean protein is used. In general, the suitable ratio of water to be added is such that the hydrate has shape retention such that it can be grasped in the hand. That is, in the case of a relatively small water content, the hydrate should have shape retention such that it is not broken into pieces when it is grasped in the hand. For a relatively large water content, the hydrate should have shape retention such that it does not escape from between the fingers.

When water is added to the heat coagulable vegetable protein to obtain the hydrate it is necessary that the heat coagulable vegetable protein and water is uniformly mixed to give a hydrate having shape retention. For this purpose, for example, a cutter such as a silent cutter can be used to hydrate (knead) them.

The advantage of using a silent cutter is that only one apparatus can be used for both hydration (kneading) and cutting by simply changing the rotation rate.

The appropriate rotation rate of the cutter in hydration (kneading) is about 1,000 to about 5,000 rpm, preferably about 1,500 to about 4,000 rpm, although it is changed according to the particular shape and number of blades. When the rotation rate of the cutter is low, it is difficult to uniformly or homogeneously hydrate (knead) soybean protein with water and, for example, the resultant hydrate is broken into pieces. When the rotation rate is high, no problem is present, although it is difficult to increase the rotation rate to higher than 5,000 rpm.

As an apparatus for hydration other than a cutter, for example, a mortar mill or the like can be used. However, another apparatus is required for cutting because the mill is not suitable for molding by cutting in the subsequent step.

Other food additives such as starch, seasonings, fats and oils, coloring agents, flavors and the like can be appropriate in the preparation of the hydrate by hydrating the heat coagulable vegetable protein with water.

Examples of starch include starch from root crops such as potato, tapioca and the like, starch from cereals such as wheat, rice, corn and the like, α-starch thereof, chemically modified starch, hydrolyzed dextrin and the like can be used.

Addition of a starch is suitable for adjusting the hardness of the granular proteinaceous material. The texture with a meat granular appearance and mastication feel can be provided to the granular proteinaceous material when the amount of starch added to the hydrate is 1 to 200 parts by weight, preferably 10 to 100 parts by weight per 100 parts by weight of the heat coagulable protein. That is, as the ratio of the starch is higher, the granular proteinaceous material can be softer. Thus, the meat granule appearance and mastication feel can be adjusted as desired.

The hydrate thus obtained can itself be gelled after standing for a long period of time or heating and can be cut into granules. However, as is known in the prior art, continuous production cannot be carried out because it is necessary to stand at 30°C for more than 2 hours.

To the contrary, in the present invention, continuous production can be carried out without interruption by preparing the hydrate and immediately cutting it in contact with an oil (cutting is carried out with addition of an oil or, after addition of an oil, cutting is carried out) without standing until occurrence of "suwari (gelling)". By adding an oil, the hydrate is cut into granules with coating an oil. Thus, adhesion of the granules themselves and adhesion of the granules to the cutter blades are prevented to obtain the desired granular proteinaceous material.

When the hydrate (including the kneaded material) obtained as described above is cut as it is, the hydrate cannot be molded into granules by cutting because of adhesion between the granules themselves. However, according to the present invention, when cutting is carried out with addition of an oil to the hydrate, the desired granular proteinaceous material of the present invention can be prepared. When the same apparatus as used in hydration (including homogenization) is used, emulsification of the hydrate and oil is prevented by lowering the rotation rate of the blades or the like.

The oil to be added to the hydrate is not specifically limited and commercially available animal or vegetable oils and fractionated or processed oils thereof can be used. Examples thereof include vegetable oils such as from soybean oil, coconut oil, palm oil, palm kernel oil, corn oil, cotton seed oil and the like, and an animal oil such as lard, tallow and the like.

The suitable ratio of the oil to be added is 1 to 30 parts by weight, preferably 5 to 20 parts by weight, more preferably 5 to 10 parts by weight per 100 parts by weight of the hydrate. When the amount of the oil is too small, the hydrate adheres together and cannot be separated into granules by cutting. Then it is difficult to granulate the hydrate. When the amount of the oil is too large, granulation of the hydrate itself is possible, but the resultant proteinaceous material obtained becomes unfavorably oily because excess oil separates from the material.

In cutting, it is preferred to use the same cutter as used in the preparation of the hydrate whilst lowering the rotation rate of the cutter blades because there is no need to use another different cutting apparatus. The use of other cutting apparatus leads to an increase in production steps and decrease in productivity.

The cutting conditions depend on the desired size of the granular proteinaceous material, the type of the cutter, the ability of the cutter and the like. For example when using a silent cutter having six blades, the rotation rate can be 10 to 800 rpm, preferably 100 to 600 rpm, more preferably 200 to 500 rpm. When the rotation rate is too high, this is unsuitable because the hydrate and the oil are emulsified to form a W/O emulsion paste. When the rate is too low, cutting cannot be done well or it takes a long period of time for cutting.

Within the above-described range of the rotation rate, when the rate is higher, the cutting time becomes shorter and, when the rate is lower, the cutting time becomes longer. To obtain the desired size of the granular proteinaceous material, normally, 10 seconds to several minutes, preferably 20 seconds to 3 minutes, more preferably 30 seconds to 2 minutes is required depending on the particular type of a cutting apparatus.

A suitable average diameter of the granular proteinaceous material of the present invention is almost the same as that of minced meat or suitable for mixing with minced meat. Normally, the average diameter can be about 2 mm to 7 mm, preferably about 3 mm to 5 mm. The diameter of the granular proteinaceous material can be adjusted to the desired size by controlling the rotation rate of the cutter and the cutting time. When the diameter of the granular proteinaceous material is too large, the material is not suitable as minced meat. When the diameter of the granular proteinaceous material is too small, the material loses the granular meat appearance.

The granular proteinaceous material thus obtained is less elastic and less flexible than conventional heated gels and the texture and mouth feel are mild when it is used in a hamburger analogue or the like.

In addition, the granular proteinaceous material can be stored after production thereof because it can be stored in a frozen or refrigerated state. When the ratio of water to be added is 2 to 3 parts by weight per one part by weight of soybean protein, the material is suitable for storage in a frozen state because protein denaturation like "kola-doff (dried soybean curd)" by freezing does not occur.

Another aspect of the present invention is to provide processed minced meat food analogues.

The processed minced meat food analogues of the present invention are not specifically limited in so far as the above described granular proteinaceous material is used and include, for example, meatball analogues, hamburger analogues, dumpling analogues stuffed with the granular proteinaceous material of the present invention, shao-mai analogues, meat bun analogues and the like.

The processed minced meat food analogues of the present invention can be produced by adding a binder to the granular proteinaceous material, kneading or mixing them whilst preventing breaking of the granules of the material, molding and baking the mixture.

Examples of the binder used in the present invention are meat paste, egg white, whole egg, kneaded paste of casein and water (aqueous paste), aqueous paste of milk albumin, aqueous paste of plasma protein and the like. In addition, a protein paste having integrity such as aqueous paste of powdered soybean protein or soybean protein emulsion paste composed of powdered soybean protein, an oil and water can be used.

Furthermore, other auxiliary materials can be used. For example, raw materials used in commercially available hamburgers such as starch, bread crumb, onion and the like can be used for hamburger analogues. Seasonings such as HVP (hydrolyzed vegetable protein), coloring agents, flavors, other food additives can be used.

The processed minced meat food analogues of the present invention can be produced by using only the granular proteinaceous material of the present invention and the binder as main ingredients. However, broken meat, textured vegetable protein such as TVP, or so-called structured vegetable protein having excellent fibrous structure can be used together. In addition, minced meat granular appearance and texture can be provided by using the granular proteinaceous material of the present invention in a paste meat such as chicken paste.

Conditions of mixing (or kneading), molding and heating or cooking can be selected according to the desired processed minced meat food analogues.

For example, a hamburger analogue can be produced by kneading the granular proteinaceous material and a binder and molding and baking the mixture. A meatball analogue can be produced by molding a mixture of the granular proteinaceous material and a binder into a ball shape and baking by frying. In addition, a kneaded mixture of the granular proteinaceous material and a binder can be used for the production of dumpling, shao-mai and meat bun analogues and the like.

The heating or cooking time is varied according to the size of the processed minced meat food analogues. When producing hamburger analogues, baking can be carried out in a oven at an inner temperature of, normally, about 200 to 350°C.

When producing meatball analogues, the frying temperature can be varied according to the size and, normally, can be about 130 to 210°C, preferably 150 to 200°C, more preferably 160°C to 190°C.

When producing steamed foods such as meat bun analogues, steaming can be carried out so that the core temperature thereof reaches at lowest at about 70°C. Suitably, the core temperature is about 70 to 90°C.

Alternatively, a kneaded mixture of the granular proteinaceous material of the present invention and a binder can be firstly filled into plastic molds, steamed (the core temperature must be above 70°C) and stored for marketing. Then, after marketing, the mixture can be baked without treatment or cut to a suitable size to produce a hamburger analogue or the like.

The following examples and comparative examples further illustrate the present invention but are not to be construed to limit the scope thereof.

### Example 1

Granular proteinaceous materials were prepared according to the formulations as shown in Table 1 below using the isolated soybean protein, "New Fujipro SE" (manufactured by Fuji Oil Co., Ltd.), and an oil, "Daizu Shirashimeyu" (a soybean refined oil for frying manufactured by Fuji Oil., Ltd.).

An elastic hydrate was prepared by kneading New Fujipro SE and water using a silent cutter ("20L vacuum cutter" manufactured by Higashimoto Kikai) at 2,000 rpm for 1 to 2 minutes and sufficiently hydrating.

Then, Daizu Shirashimeyu was added and cutting was carried out at 400 rpm for 30 seconds to 1 minute to obtain a granular proteinaceous material having an average diameter of about 3 mm to 5 mm.

**Table 1**

| Water temperature and amount of water added (parts by weight) | | | | |
|---|---|---|---|---|
| Sample No. | 1 | 2 | 3 | 4 |
| Isolated soybean protein | 1000 | 1000 | 1000 | 1000 |
| Water | 3000 | 3000 | 2000 | 4000 |
| Water temp. | 15°C | 30°C | 15°C | 15°C |
| Daizu Shirashimeyu | 200 | 200 | 25 | 250 |

The properties of each sample prepared were as follow:

### Sample 1

The isolated soybean protein was sufficiently hydrated. The hydrate was readily granulated with good shape retention and had a soft elasticity.

### Sample 2

The isolated soybean protein was sufficiently hydrated. The hydrate was readily granulated with good shape retention and had elasticity. The granular material was somewhat harder than Sample 1 which was prepared by using water at 15°C.

### Sample 3

A longer time was required to hydrate the isolated soybean protein than Sample 1. However, the isolated soybean protein was sufficiently hydrated and granulated. Sample 3 has better elasticity and was considerably harder than Samples 1 and 2, while the mouth feel was acceptable.

### Sample 4

The isolated soybean protein was hydrated more rapidly than Sample 1 and granulated. The hydrate has good shape retention. It had less elasticity and was softer than Sample 1.

### Comparative Example 1

According to the same manner as described in Example 1, granulation was carried out using the formulations as shown in Table 2.

**Table 2**

| Water temperature and amount of water added (parts by weight) | | |
|---|---|---|
| Sample No. | 1 | 2 |
| Isolated soybean protein | 1000 | 1000 |
| Water | 500 | 7000 |
| water temp. | 15°C | 15°C |
| Saizu Shirashimeyu | 75 | 400 |

### Sample 1

The isolated soybean protein was insufficiently hydrated. The material was fragile and hardly granulated.

### Sample 2

The isolated soybean protein was hydrated sufficiently. However, the resultant hydrate obtained was fluid and hardly granulated by cutting.

### Comparative Example 2

A hydrate (a kneaded material) was prepared by mixing the isolated soybean protein and water by using the same formulation as Sample 1 in Table 1 of Example 1, kneading by a silent cutter ("20L Vacuum Cutter" manufactured by Higashimoto Kikai) at 2,000 rpm for 1 to 2 minutes and sufficiently hydrating.

Then, cutting was carried out without addition of Daizu Shirashimeyu. However, the hydrate adhered to the blades of the cutter and was not separated into granules.

Therefore, the hydrate was stood at 40°C for 2 hours to prepare a low temperature denatured gel. Then, cutting was carried out without addition of Daizu Shirashimeyu at 400 rpm for 30 seconds to 1 minute to obtain a granular proteinaceous material having an average diameter of about 3 mm to 5 mm.

Although the sample obtained had more elastic hardness than that of Sample 1 in Table 1 of Example 1, it was less flexible than Sample 1 in Table 1 of Example 1.

It was considered that this resulted from the omission of addition of the oil as in Example 1.

### Example 2

According to the same manner as described in Example 1, a hydrate of the soybean protein was prepared using the formulation as shown in Table 3 below and was cut into granules to obtain a granular proteinaceous material.

**Table 3**

| Water temperature, amount of oil added and amount of starch added (parts by weight) | |
|---|---|
| Isolated soybean protein | 1000 |
| Water | 3000 |
| Potato starch | 1000 |
| Water temp. | 15°C |
| Daizu Shirashimeyu | 200 |

The isolated soybean protein and the starch were sufficiently hydrated and clearly defined granules were obtained. The granulated material had a texture with a better meat granule appearance and better mastication feel than Sample 1 of Example 1.

### Comparative Example 3

According to the same manner as described in Example 2, a granular proteinaceous material was prepared by using the formulation as shown in Table 4 below.

**Table 4**

| Water temperature, amount of oil added and amount of starch added (parts by weight) | | |
|---|---|---|
| Sample No. | 1 | 2 |
| Isolated soybean protein | 1000 | 1000 |
| Water | 3000 | 3000 |
| Potato starch | 3000 | - |
| Water temp. | 15°C | 80°C |
| Daizu Shirashimeyu | 200 | 200 |

In Sample 1 obtained, the isolated soybean protein was sufficiently hydrated and clearly defined granules were obtained. However, the granular material was quite sticky and there was a tendency that the granules once formed by cutting aggregated again to form a large mass. In addition, the texture of this granulated material was far from that of meat and was sticky like a rice cake.

In Sample 2 obtained, the isolated soybean protein was sufficiently hydrated and clearly defined granules were obtained. However, the granular material had a hard and rubber-like elastic mouth feel and a bad mastication feel. In addition, another apparatus was required for preparing hot water at 80°C and addition of such hot water to the raw materials had to be carried out with special caution.

### Example 3

By using the granular proteinaceous material Sample Nos. 1, 3 and 4 prepared in Example 1, Sample No. 2 of Comparative Example 3 and the sample prepared in Example 2, hamburger analogue materials were prepared by kneading the ingredients as shown in Table 5, molded into respective hamburgers of 55 g and baked at 220°C for 8 minutes to obtain hamburger analogues. Then, the hamburger analogues were cooled and frozen for storage.

Later, after thawing the frozen analogue materials at room temperature, both sides of the materials were baked with a fire of middle strength (1 minute per side). Organoleptic evaluation was carried out by 10 panelists with scoring by 0 to 5 points (5 is the best and 0 is the worst) and averages of the scores were calculated.

In the overall evaluation, "good" means a score of 3.5 to 5 and "bad" means a score of 1 to 2 in the organoleptic test.

The results of the evaluation are shown in Table 6.

**Table 5**

| Composition (parts by weight) | |
|---|---|
| Ingredient | Parts |
| Pork meat | 90 |
| Granular soybean proteinaceous material | 90 |
| Lard | 20 |
| Tallow | 10 |
| Salt | 2.0 |
| White pepper | 0.9 |
| Garlic powder | 0.5 |
| Nutmeg | 0.5 |
| Sugar | 1.5 |
| Sodium glutamate | 0.5 |
| Liquid egg white | 15 |
| Onion | 60 |
| Bread crumbs | 24 |

Minced pork meat prepared by treating with a 4.5 mm chopper and lard prepared by treating with a 6 mm chopper were used.

**Table 6**

| Evaluation | | | | | |
|---|---|---|---|---|---|
| Sample No. of granular soybean proteinaceous material | Example 1 | | | Comp. Example 3 | Example 2 |
| | 1 | 3 | 4 | 2 | |
| Organoleptic score | 4.5 | 3.0 | 3.3 | 1.6 | 4.8 |
| Overall evaluation | good | good | good | bad | good |

The results of the organoleptic test were as follows:

Sample 1 of Example 1 had a suitable granular meat appearance and mouth feel and did not have any incongruity.

Sample 3 of Example 1 had a granular meat appearance and mouth feel. However, it was rather harder and tended to remain in the mouth.

Sample 4 of Example 1 had less granular meat texture. However, it had excellent mastication properties.

Sample 2 of Comparative Example 3 had a granular meat appearance and mouth feel. However, it was very hard and remained in the mouth like meat fibers.

The sample of Example 2 had a suitable granular meat appearance and mouth feel and did not have incongruity. It had excellent mastication properties.

### Example 4

According to the same manner as described in Example 3, a hamburger analogue was prepared by using the formulation as shown in Table 7.

**Table 7**

| Formulation (parts by weight) | | | |
|---|---|---|---|
| | A | B | C |
| Ingredient | (parts) | (parts) | (parts) |
| Textured soybean protein | 170 | 90 | 10 |
| Granulated soybean protein | 10 | 90 | 170 |
| Caramel pigment | 0.6 | 0.6 | 0.6 |
| Seasoning | 20 | 20 | 20 |
| Spice | 4 | 4 | 4 |
| Vegetable oil | 30 | 30 | 30 |
| Soybean protein paste | 140 | 140 | 140 |
| Onion | 50 | 50 | 50 |
| Bread crumbs | 30 | 30 | 30 |

The textured soybean protein was restored by adding 3 parts by weight of water to 1 part by weight of "New APEX-1000" (manufactured by Fuji Oil Co., Ltd.). The granular soybean proteinaceous food was similar to that of Example 1. The soybean protein paste was a kneaded paste prepared by adding 4 parts by weight of water to 1 part by weight of a isolated soybean protein "Fujipro-R" (manufactured by Fuji Oil Co., Ltd.).

By using these ingredients, hamburger analogues were prepared according to the same manner as described in Example 3 and an organoleptic test was carried out.

### Evaluation

A: Due to the use of the textured soybean protein together, a texture rich in granular meat appearance and mouth feel increased. However, a rough feeling to the throat due to the textured soybean protein remained to some extent.
B: Due to increase in the ratio of the granular soybean protein food used together, the texture became better in granular mince meat appearance and mouth feel and in mastication feel than A. In addition, the texture was smoother to the throat than A.
C: The texture was granular similar to minced meat or powdered minced meat. The texture was smooth to the throat.

### Example 5

A material prepared according to the same manner as described with respect to Sample B of Example 4 was molded into a meatball shape of 12 g and fried in an oil for "tempura" at 170°C for 30 seconds to obtain a meatball analogue.

The meatball analogue had excellent mouth feel like minced meat and was smooth to the throat.

### Experiment 1

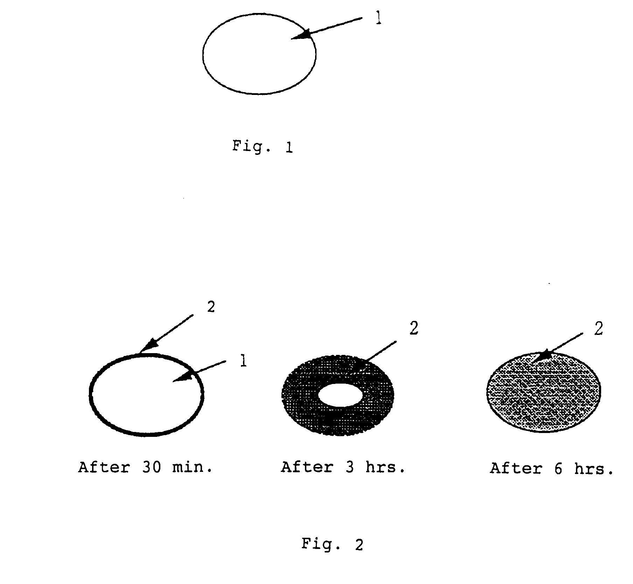

A hydrate having elasticity was obtained according to the same manner as described with respect to Sample 2 of Example 1. A schematic cross section of the granular proteinaceous material 1 is shown in Fig. 1.

On the other hand, Sudan III was dissolved in Daizu Shirashimeyu in an amount of 1% by weight and added to the hydrate. Cutting was carried out under the same conditions as described in Example 1 to obtain a granular proteinaceous material.

The granular proteinaceous material was cut with a knife and the cross section was observed. The inside was not stained with Sudan III and only the outer surface was stained by the oil soluble pigment 3. After standing for 6 hours, overnight and one day, no change in the stained state was observed and no permeation of the oil containing Sudan III in the inside of the granular proteinaceous material was observed.

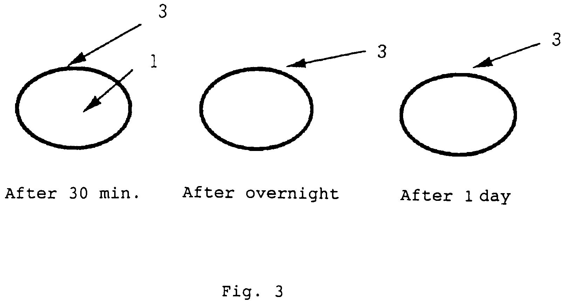

The results are shown in Fig.3.

### Experiment 2

According to the same manner as described in Experiment 1, "Oily Sunbeat" (manufactured by San-Ei Gen FFI Co., Ltd.) which was a water soluble pigment but dispersible in oil due to its finely divided properties was dispersed in Daizu Shirashimeyu in an amount of 1% by weight and added to the hydrate. Cutting was carried out to obtain a granular soybean proteinaceous material.

After standing, the cross section was observed periodically as in Experiment 1. Immediately after preparation, only the surface of the granular proteinaceous material was stained in red. After 3 hours, half of the inside was stained by the water soluble pigment 2 and, after 6 hours, the inside was wholly stained. It was found that the pigment permeated the inside gradually.

The results are shown in Fig. 2.

As described hereinabove, according to the present invention the granular proteinaceous material can be produced continuously because formation of a low temperature protein gel is not required. In addition, the granular proteinaceous material can be produced without preparation of warm water because formation of a protein denatured gel is not required. The texture of the granular proteinaceous material is softer than a heated gel.

According to the present invention, the hydrate can be cut and separated without adhesion by use of an oil, while the hydrate to be used for preparing the above low temperature gel or high temperature gel cannot be cut due to adhesion.

In addition, in the present invention, by using the same cutter as that used in the preparation of the hydrate, the granular proteinaceous material can be readily prepared by simply changing the rotation rate of the cutting blades. Therefore, the process of the present invention is very simple in view of the apparatus to be used.

## Claims

1. A granular proteinaceous material comprising a granular hydrate of a heat coagulable vegetable protein and water the surface of which is coated with an oil.

2. A granular proteinaceous material according to claim 1, wherein the ratio of the oil covering the surface is 1 to 30 parts by weight per 100 parts by weight of the entire granular proteinaceous material.

3. A process for preparing a granular proteinaceous material which comprises molding a hydrate of a heat coagulable vegetable protein and water into granular form, while contacting the hydrate with an oil.

4. A process according to claim 3, wherein the preparation of the hydrate and the molding of granules are carried out using a single cutting apparatus, setting the rotation rate of the cutter blades in the molding step of granules to a rate lower than that in the preparation of the hydrate.

5. A processed minced meat food analogue produced by kneading the granular proteinaceous material according to claim 1 and a binder, molding and cooking.

6. A processed minced meat food analogue according to claim 5, wherein the analogue further comprises one or more granular materials selected from textured vegetable proteins, structured vegetable proteins and minced meat.
